# EUROPEAN PATENT APPLICATION

(11) **EP 1 916 844 A2**
(43) Date of publication of application: **30.04.2008**
(21) Application number: 07116025.3
(22) Date of filing: 10.09.2007
(51) Int. Cl.: H04N 5/76

(54) **Method and apparatus for storing broadcast program**

(30) Priority: 26.10.2006 KR 20060104688
(71) Applicant: SAMSUNG ELECTRONICS CO., LTD., Suwon-si, Gyeonggi-do (KR)
(72) Inventor: Shin, Sung-chol, Yeongtong-gu, Suwon-si Gyeonggi-do (KR)
(74) Representative: Robinson, Ian Michael

(57) **Abstract**

A method and apparatus for storing a broadcast program are provided. The apparatus includes a receiving unit (210,215) that receives a broadcast program, a user input unit (220) that receives a folder selection signal for selecting a folder in which the broadcast program is to be stored, and a controller (230) that controls the broadcast program to be stored in a folder that is selected in response to in the folder selection signal.

## Description

### BACKGROUND OF THE INVENTION

### 1. Field of the Invention

Methods and apparatuses consistent with the present invention relate to storing a broadcast program, and more particularly, to storing a broadcast program, in which digital broadcast programs are sorted and stored so as to efficiently manage the stored broadcast programs.

### 2. Description of the Related Art

As analog broadcasting has been replaced with digital broadcasting, the functions of an apparatus which receives and provides a digital broadcast program become diversified. For example, a digital television has not only functions of receiving and outputting a digital broadcast program but also a program guide function, a recording function, and so on.

A user can store various types and large amounts of broadcast programs, as it has become normal that a digital broadcast program is recorded by using a terminal device, such as a digital television or a set top box, and techniques of storing digital broadcast programs in storage media have been developed. As the size of a broadcast program increases, the stored broadcast program must be efficiently managed so that a user can efficiently use it.

### SUMMARY OF THE INVENTION

According to the present invention there is provided an apparatus and method as set forth in the appended claims. Other features of the invention will be apparent from the dependent claims, and the description which follows.

The present invention provides a method and apparatus for storing a broadcast program, which are capable of efficiently managing digital broadcast programs by sorting and storing the digital broadcast programs.

According to an aspect of the present invention, there is provided an apparatus for storing a broadcast program, the apparatus comprising a receiving unit which receives a broadcast program; a user input unit which receives a folder selection signal for selecting a folder in which the broadcast program is to be stored; and a controller which controls the broadcast program to be stored in the folder that is selected in response to the folder selection signal.

The apparatus may further comprise a storage unit which stores the broadcast program in a location corresponding to the selected folder, under control of the controller.

The controller may provide information regarding at least one folder for storing the broadcast program.

The apparatus may further comprise an output unit which outputs the broadcast program, wherein the controller controls the output unit to display a folder list, which includes at least one folder for storing the broadcast program, on a screen image that provides broadcast program information.

The folder may be preset, or set in response to a user input signal.

According to another aspect of the present invention, there is provided a method of storing a broadcast program, the method comprising receiving a broadcast program selection signal; providing information regarding at least one folder for storing a broadcast program selected based on the broadcast program selection signal; receiving a folder selection signal for selecting a folder in which the broadcast program is to be stored; and storing the broadcast program in the folder that is selected based on the folder selection signal.

According to another aspect of the present invention, there is provided an apparatus for storing a broadcast program, the apparatus comprising a receiving unit which receives a broadcast program and metadata regarding the broadcast program; and a controller which selects a folder in which the broadcast program is to be stored, using the metadata regarding the broadcast program, and controls the broadcast program to be stored in the selected folder.

The apparatus may further include a storage unit which stores the broadcast program.

The receiving unit may receive the metadata regarding the broadcast program via at least one of a broadcast channel and a bi-directional communication channel.

The receiving unit may obtain the metadata regarding the broadcast program by using a program and system information protocol (PSIP).

The metadata regarding the broadcast program may be TV-Anytime metadata.

The controller may generate a folder based on the metadata regarding the broadcast program.

The metadata regarding the broadcast program may comprise at least one of broadcast channel information, title information, and genre information.

According to another aspect of the present invention, there is provided a method of storing a broadcast program, the method comprising receiving a broadcast program selection signal for selecting a broadcast program; selecting a folder in which the broadcast program is to be stored, using metadata regarding the selected broadcast program; and storing the broadcast program in the selected folder.

### BRIEF DESCRIPTION OF THE DRAWINGS

The above and other aspects of the present invention will become more apparent by describing in detail exemplary embodiments thereof with reference to the attached drawings, in which:
FIG. 1 is a block diagram of a digital broadcast environment that includes a broadcast program storing apparatus according to an exemplary embodiment of the present invention;
FIG. 2 is a block diagram of a broadcast program storing apparatus according to an exemplary embodiment of the present invention;
FIG. 3 illustrates a screen image which is provided from a broadcast program storing apparatus so that a user can select a folder that can store a broadcast program, according to an exemplary embodiment of the present invention;
FIG. 4 is a flowchart illustrating a method of storing a broadcast program according to an exemplary embodiment of the present invention; and
FIG. 5 is a flowchart illustrating a method of storing a broadcast program according to another exemplary embodiment of the present invention.

### DETAILED DESCRIPTION OF EXEMPLARY EMBODIMENTS

Hereinafter, exemplary embodiments of the present invention will be described in detail with reference to the accompanying drawings.

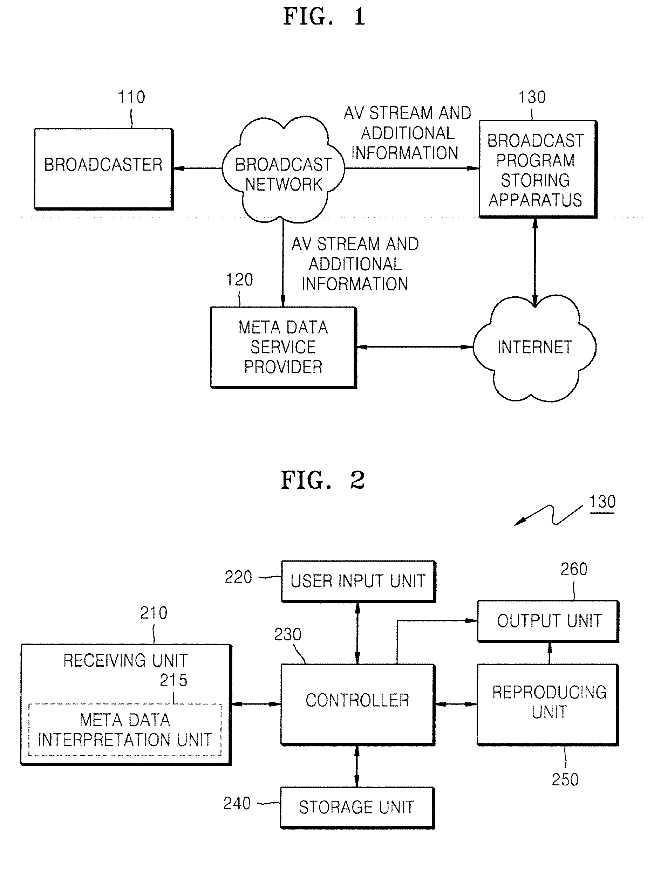

FIG. 1 is a diagram of a digital broadcast environment that includes a broadcast program storing apparatus 130 according to an exemplary embodiment of the present invention.

A broadcaster 110 transmits a broadcast signal that contains an audio/video (AV) stream and additional information to the broadcast program storing apparatus 130. An example of the additional information is electronic program guide (EPG) information. A metadata service provider 120 collects the additional information and processes it so that the additional information can be provided in the form of a web service via the Internet or by broadcasting. For example, the additional information is processed in the form of an Internet language, such as a HyperText Markup Language (HTML) or an extensible Markup Language (XML), which constitutes an Internet website, and then is transmitted to the broadcast program storing apparatus 130.

Thus, the broadcast program storing apparatus 130 is capable of receiving the additional information not only via a broadcast network but also via a bi-directional communication network, such as the Internet. When a service provider provides a broadcast program via the Internet, the broadcast program storing apparatus 130 is also capable of receiving the broadcast program via the Internet.

FIG. 2 is a block diagram of the broadcast program storing apparatus 130 according to an exemplary embodiment of the present invention. The broadcast program storing apparatus 130 includes a receiving unit 210, a user input unit 220, a controller 230, a storage unit 240, a reproducing unit 250, and an output unit 260. The broadcast program storing apparatus 130 may be a digital television or a set top box which is capable of receiving and storing a digital broadcast program. The broadcast program storing apparatus 130 sorts and stores broadcast programs. To this end, in an exemplary embodiment of the present invention, when storing a broadcast program, the broadcast program storing apparatus 130 selects a folder in which the broadcast program is to be stored, and stores the broadcast program in the selected folder.

As used herein, the term "folder" is similar to a file system available in a general computer operating system environment. The folder denotes a physical location in which a broadcast program is actually stored. Broadcast programs can be actually sorted and stored according to their physical locations in units of folders. The folder may also denote information regarding a directory in which broadcast programs are sorted and stored by using information regarding their locations and not their physical locations, so that they can be managed in the form of group and in a virtual space.

The receiving unit 210 receives a broadcast program that contains an AV stream and additional information. The broadcast program may be received via either a broadcast channel, such as terrestrial broadcasting or a satellite, or a bi-directional channel, such as the Internet. When a broadcast program is received via a broadcast signal, the receiving unit 210 may include a tuner unit (not shown) that tunes in and demodulates a broadcast signal received via a specific channel that a user selects, and outputs a transport stream; and a demultiplexer (not shown) that demultiplexes the multiplexed transport stream received via the tuner unit into a video stream and an audio stream. When a broadcast program is received via the Internet, the receiving unit 210 may be constructed to process broadcast program data transmitted in the form of Internet protocol (IP) packets.

The user input unit 220 may be constructed with selection keys, a touch screen, etc., so that it can operate in response to a user input signal. The user input unit 220 receives the user input signal, such as a user input signal for selecting a broadcast program that is to be stored or a folder selection signal for selecting a folder in which the broadcast program is to be stored; and transmits it to the controller 230.

The controller 230 controls exchange of data between constituent elements of the broadcast program storing apparatus 130 according to an exemplary embodiment of the present invention, and controls the whole operation of the broadcast program storing apparatus 130. The controller 230 performs a management operation for accessing data stored in the storage unit 240. The controller 230 is capable of performing the management operation by using address information regarding the data stored in the storage unit 240. Also, according to an exemplary embodiment of the present invention, the controller 230 controls a broadcast program to be stored in a predetermined folder, and manages information about the folder.

In an exemplary embodiment of the present invention, a broadcast program is stored in a folder that is determined based on a user's input. When a broadcast program that is to be stored is selected according to the user's input signal, the controller 230 provides information regarding at least one folder that can store the broadcast program. A folder may be preset in the broadcast program storing apparatus 130, or may be generated and set in response to the user's input signal.

A user inputs a folder selection signal based on the information regarding the at least one folder, and the controller 230 controls the broadcast program to be stored in a folder selected based on the folder selection signal received via the user input unit 220.

The storage unit 240 stores the broadcast program in a location corresponding to the folder selected under the control of the controller 230. The storage unit 240 may be any type of recording medium, for example, an optical medium, such as a hard disc, or a flash memory. The storage unit 240 may be included in the broadcast program storing apparatus 130 as illustrated in FIG. 1, or may be an external storage device connected to the broadcast program storing apparatus 130.

The broadcast program stored in the storage unit 240 may be demultiplexed data or data that has yet to be demultiplexed, depending on a route via which the broadcast program is transmitted. When a user sets reserved-recording, the storing of the broadcast program may be actually performed at a scheduled time. The reproducing unit 250 decodes the demultiplexed audio and video streams processed by the receiving unit 210, and outputs the result of decoding. Also, the reproducing unit 250 decodes the broadcast program stored in the storage unit 240 and outputs the result of decoding.

The output unit 260 outputs a screen image to provide the broadcast program and broadcast program information. The output unit 260 may include an audio output unit, such as a speaker, and a display unit for displaying an image.

The controller 230 may control a list of at least one folder that can store a broadcast program selected in response to a selection signal, based on the broadcast program information contained in the screen image, to be displayed on the output unit 260, thereby providing the information regarding the at least one folder.

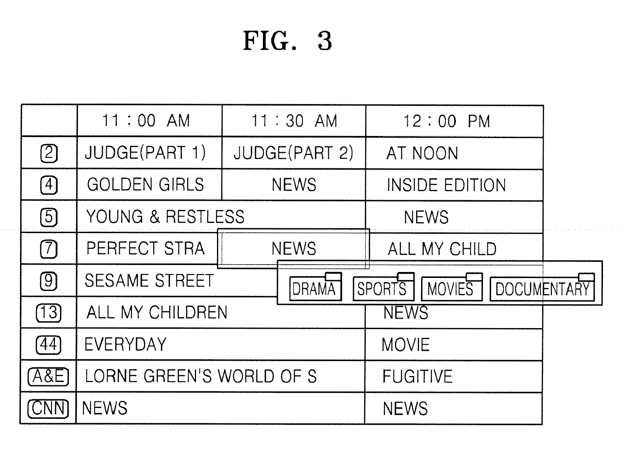

A list of folders provided when a broadcast program is selected, is as shown in a user interface picture illustrated in FIG. 3. FIG. 3 illustrates a screen image which is provided from a broadcast program storing apparatus so that a user can select a folder that can store a broadcast program, according to an exemplary embodiment of the present invention.

When a user selects a broadcast program, which is to be recorded, i.e., "NEWS", on a screen image that provides EPG information, as illustrated in FIG. 3, via a user input device, a list of folders that can store broadcast programs is displayed at the bottom of the selected broadcast program. Referring to FIG. 3, the list of folders are sorted according to genre, such as a "drama", "sports", "movies", and "documentary". If the user selects a folder from the list of folders, the selected broadcast program is stored in the selected folder. If the user desires to generate another folder in order to store a broadcast program, he or she may input a user input signal for generating a folder via the user input unit 220, and the controller 230 may generate a folder in response to the user input signal.

If a user selects a broadcast program that is to be reserved-recorded, the selected broadcast program will be received and stored in the selected folder at a scheduled time. FIG. 3 illustrates a list of folders sorted according to genre, but a list of folders may be sorted according to channel. That is, folder names and folder categories are not limited to those described herein.

According to another exemplary embodiment of the present invention, broadcast programs are sorted and stored according to folder, using metadata that is information regarding the broadcast programs.

In a broadcast program storing apparatus according to another exemplary embodiment of the present invention, the receiving unit 210 receives not only a broadcast program but also metadata that is additional data regarding the broadcast program. The metadata regarding the broadcast program contains at least one of broadcast channel information, title information, and genre information.

The receiving unit 210 may be constructed to receive the metadata regarding the broadcast program via a broadcast channel or a bi-directional communication channel. Also, the receiving unit 210 may include a metadata interpretation unit 215 that interprets metadata, and thus transmit the interpreted metadata to the controller 230. The metadata may be received using a Program and System Information Protocol (PSIP) contained in an MPEG-2 transport stream received via the broadcast channel. Also, the metadata regarding the broadcast program is TV-Anytime metadata. The TV-Anytime metadata may be obtained from EPG information in the form of XML via TV-Anytime.

TV-Anytime is a technique that has been developed by the TV-Anytime forum led by the European Telecommunication Standards Institute (ETSI) whereby active TV watching is allowed using efficient transmission of data and bi-directional communications between a user and a service. TV-Anytime allows a user to use web services that help search for and select broadcast content. TV-Anytime may be used independently from digital broadcast standards, such as Digital Video Broadcasting (DVB) and Advanced Television Systems Committee (ATSC). TV-Anytime has an advantage in that bi-directional communications can be established using web services. Also, TV-Anytime allows additional content information containing EPG information to be provided to a user, and allows the user to search for even a previous EPG by searching for EPG data that is not stored in a set top box of the user.

The controller 230 selects a folder in which the broadcast program is to be stored, using the metadata regarding the broadcast program, and controls the broadcast program to be stored in the selected folder.

The controller 230 may generate a folder based on the received metadata regarding the broadcast program. For example, it is assumed that broadcast programs are to be stored according to genre, and the broadcast program storing apparatus provides folders named "drama", "sports", "movies", and "documentary". When metadata regarding a broadcast program whose genre is "drama" is received, the controller 230 stores a broadcast program corresponding to the received metadata in the "drama" folder.

In the case where received metadata regarding a broadcast program entitled "NEWS" contains meta data that specifies "news" as genre information, as illustrated in FIG. 3, but a "news" folder is not present in the broadcast program storing apparatus 130, the controller 230 generates a folder named "news", and controls the storage unit 240 to store a corresponding broadcast program in the generated "news" folder.

As described above, according to an exemplary embodiment of the present invention, broadcast programs are sorted and stored by folder. Accordingly, when a user searches for a broadcast program stored in the broadcast program storing apparatus 130, broadcast programs are sorted and searched for by folder.

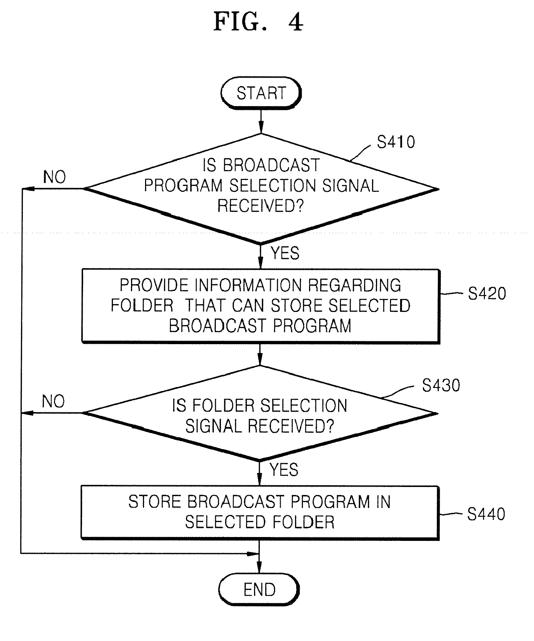

FIG. 4 is a flowchart illustrating a method of storing a broadcast program according to an exemplary embodiment of the present invention. In operation S410, it is determined whether a broadcast program selection signal is received. The broadcast program selection signal may be received when a screen image that provides EPG information is displayed.

If it is determined that the broadcast program selection signal is received, information regarding at least one folder, that can store a broadcast program selected based on the broadcast selection signal, is provided in operation S420. The information regarding the at least one folder that can store a broadcast program may be provided using various methods. In an exemplary embodiment of the present invention, operation S420 is performed by displaying a list of at least one folder that can store a broadcast program selected in response to the selection signal, based on broadcast program information contained in a screen image which provides broadcast program information. In this case, the folder may be preset, or set in response to a user input signal.

In operation S430, it is determined that a folder selection signal for selecting a folder, in which the broadcast program is to be stored, is received.

If it is determined that the folder selection signal is received, the broadcast program is stored in a folder selected based on the folder selection signal in operation S440.

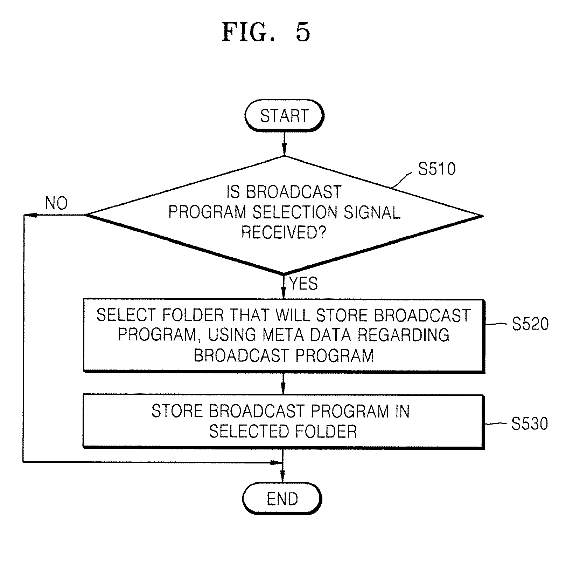

FIG. 5 is a flowchart illustrating a method of storing a broadcast program according to another exemplary embodiment of the present invention. In operation S510, it is determined that a broadcast program selection signal for selecting a broadcast program is received.

If it is determined that the broadcast program selection signal is received, a folder, in which a selected broadcast program is to be stored, is selected using metadata regarding the selected broadcast program in operation S520. The metadata regarding the broadcast program may be received via a broadcast channel or a bi-directional communication channel. The metadata regarding the broadcast program may be obtained using a PSIP. The metadata regarding the broadcast program may be TV-Anytime metadata. Also, the metadata regarding the broadcast program may contain at least one of broadcast channel information, title information, and genre information.

In operation S530, the broadcast program is stored in the selected folder. If it is determined in operation S520 that a folder corresponding to the metadata regarding the broadcast program does not correspond to a folder provided in a broadcast program storing apparatus, a folder may be generated based on the metadata regarding the broadcast program, and the corresponding broadcast program may be stored in the generated folder.

A method of storing a broadcast program according to the exemplary embodiments of the present invention can be embodied as computer readable code in a computer readable medium. Code and code segments required to perform the program may be easily derived from computer programmers in the art. Here, the computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on. The computer readable medium can be distributed among computer systems that are interconnected through a network, and the present invention may be stored and implemented as computer readable code in the distributed system.

As described above, according to an exemplary embodiment of the present invention, it is possible to efficiently manage digital broadcast programs by sorting and storing them. Also, according to an exemplary embodiment of the present invention, broadcast programs can be sorted and stored, based on metadata regarding a broadcast program or in a manner that a user selects. Also, information regarding folders that can store a broadcast program is displayed so that a user can easily select a folder in which the broadcast program is to be stored.

Also, since broadcast programs are sorted and automatically stored in a folder that is generated according to predetermined conditions, a user can efficiently search for and manage a broadcast program.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus (130) for storing a broadcast program, the apparatus comprising:
a receiving unit (210) which receives a broadcast program;
a user input unit (220) which receives a folder selection signal for selecting a folder in which the broadcast program is to be stored; and
a controller (230) which controls the broadcast program to be stored in the folder that is selected in response to the folder selection signal.

2. The apparatus of claim 1, further comprising a storage unit (240) which stores the broadcast program in a location corresponding to the selected folder, under control of the controller (230).

3. The apparatus of claim 1 or 2, wherein the controller (230) provides information regarding at least one folder for storing the broadcast program.

4. The apparatus of claim 1, 2 or 3, further comprising an output unit (260) which outputs the broadcast program, wherein the controller (230) controls the output unit (260) to display a folder list, which comprises at least one folder for storing the broadcast program, on a screen image that provides broadcast program information.

5. The apparatus of any preceding claim, wherein the folder is preset, or set in response to a user input signal.

6. A method of storing a broadcast program, the method comprising:
receiving a broadcast program selection signal;
providing information regarding at least one folder for storing a broadcast program selected based on the broadcast program selection signal;
receiving a folder selection signal for selecting a folder in which the broadcast program is to be stored; and
storing the broadcast program in the folder that is selected based on the folder selection signal.

7. The method of claim 6, wherein the providing of the information regarding the at least one folder comprises displaying a folder list, which comprises the at least one folder for storing the selected broadcast program, on a screen image that provides broadcast program information.

8. The method of claim 6 or 7, wherein the folder is preset, or set in response to a user input signal.

9. An apparatus (130) for storing a broadcast program, the apparatus comprising:
a receiving unit (210,215) which receives a broadcast program and metadata regarding the broadcast program; and
a controller (230) which selects a folder, in which the broadcast program is to be stored, using the metadata regarding the broadcast program, and controls the broadcast program to be stored in the selected folder.

10. The apparatus of claim 9, further comprising a storage unit (240) which stores the broadcast program.

11. The apparatus of claim 9 or 10, wherein the receiving unit (210,215) receives the metadata regarding the broadcast program via a broadcast channel or a bi-directional communication channel.

12. The apparatus of claim 9, 10 or 11, wherein the receiving unit (210,215) obtains the metadata regarding the broadcast program by using a program and system information protocol.

13. The apparatus of any of claims 9 to 12, wherein the metadata regarding the broadcast program is TV-Anytime metadata.

14. The apparatus of any of claims 9 to 13, wherein the controller (230) generates a folder based on the metadata regarding the broadcast program.

15. The apparatus of any of claims 9 to 15, wherein the metadata regarding the broadcast program comprises at least one of broadcast channel information, title information, and genre information.

16. A method of storing a broadcast program, the method comprising:
receiving a broadcast program selection signal for selecting a broadcast program;
selecting a folder in which the broadcast program is to be stored, using metadata regarding the selected broadcast program; and
storing the broadcast program in the selected folder.

17. The method of claim 16, wherein the metadata regarding the broadcast program is received via a broadcast channel or a bi-directional communication channel.

18. The method of claim 16 or 17, wherein the metadata regarding the broadcast program is obtained using a program and system information protocol (PSIP).

19. The method of claim 16 or 17, wherein the metadata regarding the broadcast program is TV-Anytime metadata.

20. The method of any of claims 16 to 19, further comprising generating a folder based on the metadata regarding the broadcast program.

21. The method of any of claims 16 to 20, wherein the metadata regarding the broadcast program comprises at least one of broadcast channel information, title information, and genre information.

22. A computer readable medium having recorded thereon a program for executing a method of storing a broadcast program according to any of claims 6 to 8.

23. A computer readable medium having recorded thereon a program for executing a method of storing a broadcast program according to any of claims 16 to 21.
